# FASCICULE DE BREVET EUROPEEN

(11) **EP 1 222 009 B1**
(45) Date de publication et mention de la délivrance du brevet: **20.08.2003**
(21) Numéro de dépôt: 00971468.4
(22) Date de dépôt: 20.10.2000
(51) Int. Cl.: B01D 11/02

(54) **PROCEDE DE FRACTIONNEMENT D'UNE MATIERE COMPOSEE DE PLUSIEURS CONSTITUANTS A L'AIDE D'UN SOLVANT A PRESSION SUPERCRITIQUE**
VERFAHREN ZUR FRAKTIONIERUNG EINES STOFFES BESTEHEND AUS MEHREREN BESTANDTEILEN MIT HILFE EINES LÖSUNGSMITTELS BEI ÜBERKRITISCHEM DRUCK
METHOD FOR FRACTIONATING A RAW MATERIAL CONSISTING OF SEVERAL CONSTITUENTS USING A SUPERCRITICAL PRESSURE SOLVENT

(30) Priorité: 21.10.1999 FR 9913138
(43) Date de publication de la demande: 17.07.2002
(73) Titulaire: Laboratoires La Vipharm S.A., 75116 Paris (FR)
(72) Inventeur: DESCHAMPS, Frantz, F-75013 Paris (FR); MAJEWSKI, Wieslaw, F-54520 Laxou (FR); PERRUT, Michel, F-54000 Nancy (FR); LAIMAY, François, F-77300 Fontainebleau (FR)
(74) Mandataire: Breese, Pierre
(86) Numéro de dépôt international: FR0002931
(87) Numéro de publication internationale: WO01028650

(56) Documents cités:
- WO-A-83/03425
- WO-A-91/14377
- US-A- 4 724 087
- US-A- 5 759 549

## Description

La présente invention concerne un procédé de fractionnement d'une matière première composée de plusieurs constituants à l'aide d'un solvant à pression supercritique. On entend par solvant à pression supercritique selon l'invention, un solvant en état supercritique ou un liquide subcritique. Plus particulièrement l'invention se rapporte à un procédé de fractionnement d'un mélange de lipides afin d'obtenir des fractions riches en certains lipides polaires appartenant aux classes des sphingolipides dont les céramides, des glycolipides et des phospholipides.

Un solvant en état supercritique est caractérisé soit par une pression et une température respectivement supérieures à la pression et à la température critiques dans le cas d'un corps pur, soit par un point représentatif (pression, température) situé au-delà de l'enveloppe des points critiques représentés sur un diagramme (pression, température) dans le cas d'un mélange. On sait qu'un solvant en état supercritique présente, pour de très nombreuses substances, un pouvoir solvant élevé sans commune mesure avec celui observé dans ce même solvant à l'état de gaz comprimé. Il en est de même des liquides dits "subcritiques". Des liquides subcritiques sont dans un état caractérisé soit par une pression supérieure à la pression critique et par une température inférieure à la température critique dans le cas d'un corps pur, soit par une pression supérieure aux pressions critiques et une température inférieure aux températures critiques des composants dans le cas d'un mélange (Michel PERRUT, les Techniques de l'Ingénieur, Extraction par fluide supercritique, J 2, 770, 1 à 12, 1999). Les variations importantes et modulables du pouvoir solvant de ces fluides sont d'ailleurs utilisées dans de nombreux procédés d'extraction (solide/fluide), de fractionnement (liquide/fluide), de chromatographie analytique ou préparative, de traitement des matériaux (céramiques, polymères, etc...) . Des réactions chimiques ou biochimiques sont également réalisées dans de tels solvants. Il est à noter que les propriétés physico-chimiques du dioxyde de carbone ainsi que ses coordonnées critiques (pression critique : 7,4 MPa et température critique : 31°C) en font le solvant préféré dans de nombreuses applications, surtout qu'il ne présente pas de toxicité et est disponible à très bas prix en très grande quantité. Solvant non polaire, le dioxyde de carbone, porté à pression supercritique est parfois additionné d'un co-solvant consistant en un solvant organique polaire qui va modifier le pouvoir solvant de façon notable surtout vis-à-vis de molécules présentant une certaine polarité, l'éthanol étant souvent utilisé à cette fin.

Il faut rappeler que les corps sont généralement connus sous trois états : solide, liquide et gazeux. On passe de l'un à l'autre en faisant varier la température et/ou la pression. Or il existe un point au-delà duquel on peut passer de l'état liquide à l'état gaz ou vapeur sans passer par une ébullition ou à l'inverse par une condensation, mais de façon continue, ce point est appelé le point critique.

L'un des avantages principaux des procédés mettant en oeuvre les solvants à pression supercritique réside dans la facilité de réaliser la séparation entre le solvant (le fluide) et les extraits et solutés, ainsi qu'il a été décrit dans de nombreuses publications, comme par exemple dans le brevet français publié sous FR-A-2 584 618. Les propriétés intéressantes de ces fluides sont d'ailleurs utilisées depuis longtemps en extraction solide-fluide et fractionnement liquide-fluide, ainsi qu'il est décrit dans l'article cité ci-dessus.

Le procédé de l'invention est tout particulièrement adapté au fractionnement de mélanges de lipides de polarités différentes dont on souhaite extraire un ou plusieurs constituants sous forme purifiée. Ce but est atteint grâce au procédé de fractionnement de la revendication 1.

Des matières premières préférées auxquelles le procédé de l'invention est tout particulièrement adapté sont celles dont l'un au moins des constituants est, à l'état purifié, semi-liquide, pâteux ou même solide, et dont le caractère visqueux empêche de les traiter en colonne.

On entend par dispersion tant une émulsion qu'une suspension de la matière au sein d'un liquide insoluble ou très faiblement soluble dans le solvant à pression supercritique.

Après la première extraction du procédé de l'invention, on recueille un raffinat et un extrait et l'on préfère notamment dans le cas d'une matière première constituée d'une mélange de lipide, effectuer les extractions suifvantes sur le raffinat obtenu à l'extraction précédente.

Le procédé de l'invention s'intéresse plus particulièrement au fractionnement de lipides d'origine naturelle en vue d'obtenir à l'état purifié différents composés polaires ou neutres.

Les lipides polaires sont connus pour présenter des propriétés physicochimiques particulièrement bien adaptées pour la préparation de dispersion dans l'eau, dans un solvant organique ou dans un mélange d'eau et de phase(s) organique(s), entrant dans la composition de produits cosmétiques, dermatologiques ou pharmaceutiques. En effet, ces lipides polaires sont des tensio-actifs remarquables pour stabiliser des interfaces eau-huile, et ils entrent en jeu dans la constitution des membranes des cellules vivantes. A ce jour, il est extrêmement difficile d'obtenir la plupart des lipides polaires à l'état pur à une échelle permettant des applications industrielles. Ainsi, à quelques exceptions près, ces produits ne sont disponibles que comme réactifs de laboratoire à des prix élevés. Par contre, des mélanges riches en lipides polaires sont disponibles à très grande échelle, telles les lécithines largement employées dans l'industrie alimentaire et en diététique. Il apparaît donc intéressant de fractionner ces mélanges en vue d'obtenir certains de leurs composants à l'état purifié en vue de les utiliser dans des applications à haute valeur ajoutée car leurs propriétés premières exceptionnelles comme leur sécurité notamment virale, du fait de leur origine végétale, sont difficiles à trouver dans d'autres classes de produits même synthétiques.

Les lipides neutres sont aussi utiles dans le domaine cosmétique, mais également, comme les lipides polaires, dans le domaine agro-alimentaire. Ainsi, le procédé de l'invention est tout particulièrement intéressant pour le dégommage des huiles alimentaires qui vise à éliminer les lipides polaires de l'huile. En effet, les lipides polaires sont susceptibles de limiter les propriétés organoleptiques et techniques de ces huiles.

En conséquence, le procédé de l'invention concerne plus particulièrement une matière première comprenant principalement un mélange de lipides, comme notamment une huile extraite de céréale par exemple de blé, de gluten de blé, d'orge, d'avoine, de millet, de riz, etc....

Le procédé de l'invention consiste donc à fractionner le mélange de lipides en fonction de la polarité des constituants. Ainsi, le procédé de l'invention permet d'obtenir, à l'issue d'une ou plusieurs extractions, une ou plusieurs fractions très riches en certains lipides polaires appartenant aux différentes classes suivantes : les sphingolipides, dont les céramides et les cérébrosides, les glycolipides, dont les monogalactosyldiglycérides et les digalactosyldiglycérides, les phospholipides et parmi ceux-ci notamment les phosphatidyl-cholines, les phosphatidyl-éthanolamines, les phospholipides acides, et leurs dérivés.

La dispersion est réalisée dans de l'eau ou dans une solution aqueuse de solvants organiques solubles dans l'eau, tels les alcools et de préférence l'éthanol, les cétones et de préférence l'acétone, les esters et de préférence l'acétate d'éthyle.

Selon un mode de mise en oeuvre préféré du procédé de l'invention, on utilise comme solvant à pression supercritique pour l'une au moins des extractions, le dioxyde de carbone pur ou en mélange avec différents co-solvants choisis parmi les hydrocarbures légers comprenant entre 2 et 8 atomes de carbone, les alcools et de préférence l'éthanol, les cétones et de préférence l'acétone, les esters et de préférence l'acétate d'éthyle, les hydrocarbures halogénés et de préférence les hydrocarbures fluorés. Avantageusement, l'une au moins des extractions est alors réalisée avec du dioxyde de carbone pur ou en mélange avec un ou plusieurs des co-solvants cités ci-dessus, à une pression comprise entre 7,4 et 50 MPa et de préférence entre 10 et 40 MPa et à une température comprise entre 0 et 80°C.

Selon un autre mode de mise en oeuvre préféré du procédé de l'invention, on utilise comme solvant à pression supercritique pour l'une au moins des extractions, un hydrocarbure ayant entre 2 et 5 atomes de carbone, et de préférence 3 ou 4 atomes de carbone. En effet, dans le cas du fractionnement d'un mélange de lipides, ce second type de solvant s'avére particulièrement performant dans la première phase de séparation des lipides neutres et des lipides polaires. En conséquence, la première extraction de l'étape (b) est alors avantageusement réalisée avec un hydrocarbure ayant entre 2 et 5 atomes de carbone, et favorablement 3 ou 4 atomes de carbone, à une pression comprise entre 4,2 et 20 MPa, et plus favorablement entre 5 et 15 MPa et à une température comprise entre 0 et 80°C.

Le procédé de l'invention peut être mis en oeuvre en utilisant un système de fractionnement en discontinu par charges successives ou en continu sur colonne et dans ce dernier cas avantageusement sur une colonne fonctionnant à contre-courant. Un procédé de fractionnement sur colonne fonctionnant à contre-courant est aussi appelé dans l'art antérieur "fractionnement fluide-liquide ou liquide-liquide à contre-courant". La mise en oeuvre et les applications du fractionnement à contre-courant sont largement décrites dans l'art antérieur (G. BRUNNER "Gas Extraction" chapitre 8, paru en 1994, Ed. Springer, ISBN 0-387-91477-3), notamment dans le cas des lipides (Supercritical Fluid technology in Oil and Lipid Chemistry, 1996, edité par J.W. KING et G.R. LIST, ISBN 0-935315-71-3). Il est utile de rappeler que les lipides, solubles dans les solvants organiques et insolubles dans les solvants aqueux, présentent des solubilités différentes dans les solvants à pression supercritique selon la polarité des molécules concernées et la nature des solvants mis en oeuvre. Ainsi, le dioxyde de carbone pur est utilisé comme solvant des triglycérides et permet d'extraire les huiles de différentes sources naturelles comme les graines oléagineuses (brevets Britanniques GB-A-1 356 749 et No. 1,356,750 ; brevet US-A-3 939 281). Il est également connu que ce solvant n'extrait pas les lipides polaires comme les lécithines présents dans ces mêmes graines. Cette sélectivité est d'ailleurs utilisée lors de l'extraction des lipides du jaune d'oeuf au sein duquel il est préférable de ne pas extraire les phospholipides dont les propriétés tensio-actives contribuent favorablement à la qualité organoleptique des aliments incorporant ce jaune d'oeuf délipidé, en pâtisserie en particulier. Il est également connu qu'on peut obtenir une lécithine totalement débarrassée de lipides neutres à partir d'huiles d'origine végétale extraites par la méthode classique à l'hexane. Néanmoins, les opérations de fractionnement de lipides à l'aide de solvants à pression supercritique se heurtent souvent à de sérieuses difficultés de mise en oeuvre car les phases initiales ou résultantes sont souvent très pâteuses, ce qui rend le contact avec le fluide solvant difficile voire impossible à réaliser. Certains dispositifs ont été décrits pour traiter ce problème, comme par exemple un système d'extracteur à jet proposé par Eggers E. et Wagner H., ("Proceedings of the Third International Symposium on Supercritical Fluids", ISBN 2-905267-23-8, 1994, Tome 2, p.125-130) pour déshuiler une lécithine de soja. Toutefois, il apparaît que ce système correspond à un étage théorique et ne peut valablement être mis en oeuvre que pour réaliser des séparations pour lesquelles le facteur de séparation est élevé. Par contre, on ne peut réaliser ainsi un fractionnement de composés très voisins requérant un nombre élevé de plateaux théoriques généralement mis en oeuvre sur des colonnes multiétagées à plateaux perforés ou garnissage fonctionnant à contre-courant, équipements non utilisables avec des produits de très haute viscosité, comme certains mélanges de lipides, ou susceptibles de cristalliser ou de se solidifier en entraînant le bouchage des colonnes.

Dans le cas du fractionnement d'un mélange de lipides, on préfère donc tout particulièrement réaliser l'extraction à l'aide d'un solvant à pression supercritique sur une colonne fonctionnant à contre-courant avec reflux d'extrait de façon à ce que la fraction obtenue en tête de colonne après séparation du solvant, appelée généralement extrait, soit considérablement enrichie en lipides les moins polaires par rapport à la matière première de départ. La fraction recueillie en pied de colonne, appelée généralement raffinat, se présente sous la forme d'une dispersion dans un liquide et est considérablement enrichie en lipides les plus polaires. Le seuil de coupure de cet enrichissement est déterminé par les conditions opératoires. Par exemple, un premier traitement d'un mélange de lipides neutres et polaires selon ce mode de mise en oeuvre permet d'obtenir en tête de colonne un extrait considérablement enrichi en lipides neutres et un raffinat considérablement enrichi en lipides polaires. Cette première étape est couramment nommée déshuilage. Dans le cas de raffinage de lécithines brutes, elle permet d'accéder à un raffinat qui se présente sous la forme d'une dispersion de lipides polaires. Ce premier raffinat peut directement être traité selon le même procédé avec des conditions opératoires qui définissent un seuil de fractionnement plus élevé en termes de polarité. Ainsi, le traitement de ce premier raffinat selon les étapes (b) et (c) du procédé objet de la présente invention permet d'obtenir un extrait enrichi en lipides polaires les moins polaires et un nouveau raffinat enrichi en lipides polaires les plus polaires. Ce deuxième raffinat se présente sous la forme d'une dispersion de lipides polaires et peut être à son tour traité selon les étapes (b) et (c) du procédé de l'invention avec de nouvelles conditions opératoires définissant un seuil de coupure supérieur à celui du traitement précédent en terme de polarité.

Cet enchaînement de traitement consistant à répéter les étapes (b) et (c) peut s'effectuer directement sur chaque nouveau raffinat de façon à aboutir à un fractionnement fin de la matière première.

Un exemple d'un tel procédé selon l'invention consiste à réaliser les étapes (b) et (c) sur une colonne fonctionnant à contre-courant avec reflux d'extrait, avec un solvant à pression supercritique constitué de dioxyde de carbone en mélange avec de l'éthanol à une concentration comprise entre 1 et 5% masse, porté à une pression comprise entre 7,4 et 50 MPa, et de préférence entre 15 et 30 MPa, à une température comprise entre 32 et 80°C, de façon à ce que le fractionnement d'une charge ne contenant plus de lipides neutres conduise à une fraction obtenue en tête de colonne après séparation du solvant, qui est très enrichie en sphingolipides, dont les céramides et les cérébrosides, et en monogalactosyl diglycérides par rapport à la charge. Puis on réalise à nouveau les étapes (b) et (c) sur une colonne fonctionnant à contre-courant avec reflux d'extrait, avec un solvant à pression supercritique constitué de dioxyde de carbone en mélange avec de l'éthanol à une concentration comprise entre 3 et 8% masse, à une pression comprise entre 7,4 et 50 MPa, et de préférence entre 12 et 30 MPa, à une température comprise entre 32 et 80°C, de façon à ce que le fractionnement d'une charge constitué par le raffinat obtenu précédemment conduise à une fraction obtenue en tête de colonne après séparation du solvant, qui est très enrichie en digalactosyldiglycérides par rapport à la charge.

Une autre méthode de fractionnement des lipides a été récemment décrite dans le brevet américain US-A-5 759 549, consistant à adsorber le mélange à fractionner sur un solide poreux d'où les différents composants sont extraits successivement par un solvant à pression supercritique dont le pouvoir solvant et la polarité sont successivement augmentés. Ce procédé, dont le concept a été utilisé depuis plusieurs années par plusieurs auteurs, est connu sous le nom d' "extrographie", désignant la combinaison d'extraction et de chromatographie. Ce procédé peut être opéré avec une haute sélectivité, par combinaison de la sélectivité du solide adsorbant et de celle du solvant à pression supercritique, mais requiert des moyens complexes et ne peut être mis en oeuvre qu'en mode discontinu par charges successives, ce qui induit des frais opératoires très élevés.

Un autre mode de mise en oeuvre du procédé de l'invention sur un mélange de lipide consiste donc à réaliser le fractionnement en discontinu dans un contacteur constitué d'un récipient sous pression éventuellement doté d'un garnissage destiné à améliorer la qualité du contact entre les deux phases du mélange à fractionner mis initialement en émulsion à l'étape (a), avec un solvant à pression supercritique dont le pouvoir solvant va être modifié en plusieurs étapes successives de manière à extraire successivement les différentes familles de lipides par ordre croissant de polarité. Cette opération est rendue possible par le fait que les lipides non encore extraits ne précipitent pas sous une forme de pâte qui serait observée si on traitait le mélange initial comme tel, mais restent en dispersion dans une phase liquide au sein de laquelle on peut faire percoler le fluide solvant dans de bonnes conditions pour le transfert de matière entre phases. De plus, à la fin de l'opération, on peut vidanger le contacteur sans problème puisque le raffinat se présente sous forme d'une phase liquide de faible viscosité.

Dans une forme de mise en oeuvre particulièrement avantageuse, le procédé de fractionnement est réalisé en continu. Le procédé de l'invention en continu, appliqué sur un mélange de lipides, comprend les étapes suivantes :
- on prépare une émulsion à base du mélange de lipides à fractionner dans de l'eau;
- on traite l'émulsion sur une colonne fonctionnant à contre-courant avec reflux d'extrait, opérée avec du dioxyde de carbone pur ou additionné d'un co-solvant à pression supercritique dans des conditions de pression et de température telles que la fraction obtenue en tête de colonne après séparation du solvant, appelée généralement extrait, est considérablement enrichie en lipides neutres, tels les triglycérides et les stérols, et appauvrie en composés polaires qui sont quasiment en totalité récupérés en pied de colonne dans la fraction appelée raffinat se présentant comme une dispersion dans l'eau, ou un mélange eau-cosolvant;
- le raffinat est fractionné sur une colonne fonctionnant à contre-courant avec reflux d'extrait, opérée avec du dioxyde de carbone, additionné d'un co-solvant polaire, à pression supercritique comme solvant dans des conditions de pression et de température telles que la fraction obtenue en tête de colonne après séparation du solvant, est considérablement enrichie en composés les moins polaires, tels les sphingolipides, dont les céramides, et les monogalactosyldiglycérides (MGDG), et appauvrie en composés les plus polaires, tels les glycosphingolipides et les digalactosyldiglycérides (DGDG) et les phospholipides, qui sont tous récupérés en pied de colonne sous forme d'une dispersion dans une solution aqueuse du co-solvant polaire utilisé;
- le raffinat, obtenu lors de l'étape précédente, est fractionné sur une colonne fonctionnant à contre-courant avec reflux d'extrait, opérée avec du dioxyde de carbone, additionné d'un co-solvant polaire, choisi avantageusement identique à celui utilisé dans l'étape précédente, à pression supercritique comme solvant dans des conditions de pression et de température telles que la fraction obtenue en tête de colonne après séparation du solvant, est considérablement enrichie en composés moyennement polaires, tels les digalactosyldiglycérides (DGDG), et appauvrie en composés les plus polaires, tels les phospholipides, qui sont tous récupérés en pied de colonne sous forme d'une dispersion dans une solution aqueuse du co-solvant polaire utilisé;
- on répète plusieurs fois le fractionnement du raffinat obtenu à l'étape précédente sur le même type d'équipement mais en accroissant à chaque fois la polarité du fluide solvant en faisant varier sa pression, sa température et teneur en co-solvant, de façon à séparer successivement chacune des familles de phospholipides et de leurs dérivés, parmi lesquels on peut citer : phosphatidyl-éthanolamine, phosphatidyl-choline, phospholipides acides.

L'invention se rapporte donc aussi à un procédé de purification des lipide polaires à partir d'une matière naturelle ou synthétique constituée principalement d'un mélange de lipides, caractérisée en ce que l'on fractionne ladite matière par un procédé décrit précédemment.

D'autres avantages et caractéristiques de l'invention apparaîtront des exemples qui suivent donnés à titre illustratif et dans lesquels il sera fait références aux dessins en annexe dans lesquels :
- la figure 1 représente un contacteur pour la mise en oeuvre du procédé de fractionnement selon l'invention.
- la figure 2 représente une colonne pour la mise en oeuvre du procédé de fractionnement selon l'invention.

### Exemple 1 : Matériels.

### 1) Huiles.

Les mélanges de lipides utilisés sont des huiles extraites du gluten de blé par les méthodes conventionnelles, dont les compositions massiques obtenues par chromatographie en phase liquide, sont les suivantes :
HUILE 1
   Triglycérides : 38 %
   Stérols : 4 %
   Sphingolipides : 8,5 %
   Monogalactosyldiglycérides (MGDG) : 10,2 %
   Digalactosyldiglycérides (DGDG) : 25,5 %
   Phospholipides : 13,8%
   Dont : Phosphatidyl-éthanolamine : 5,1 %
   Phosphatidyl-choline : 5,4 %
HUILE 2
   Lipides neutres : 49 %
   Sphingolipides : 9 %
   MGDG : 12 %
   DGDG : 30 %

L'huile est mise en émulsion dans un mélange d'eau et d'éthanol par agitation mécanique, avec une composition massique de : 84 % d'eau, 10 % d'huile et 6 % d'éthanol.

### 2) Équipement.

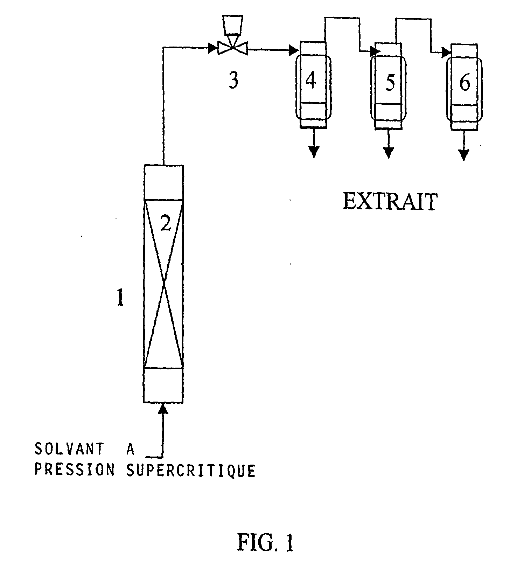

Deux appareils ont été utilisés : un contacteur fonctionnant en mode discontinu et une colonne fonctionnant en mode continu. L'équipement présenté sur la figure 1 est constitué principalement en un contacteur (1) cylindrique d'un volume de 0,5 litre rempli d'éléments de garnissage (2) de type Intalox de 10 mm de dimension nominale, qui peut être balayé par un solvant à pression supercritique dans une gamme de températures comprises entre 20 et 80°C et jusqu'à une pression de 30 Mpa. Le solvant est ensuite détendu dans une vanne (3) et l'extrait séparé dans des séparateurs (4, 5, 6) tels que ceux décrits dans le brevet français No. 2 584 618.

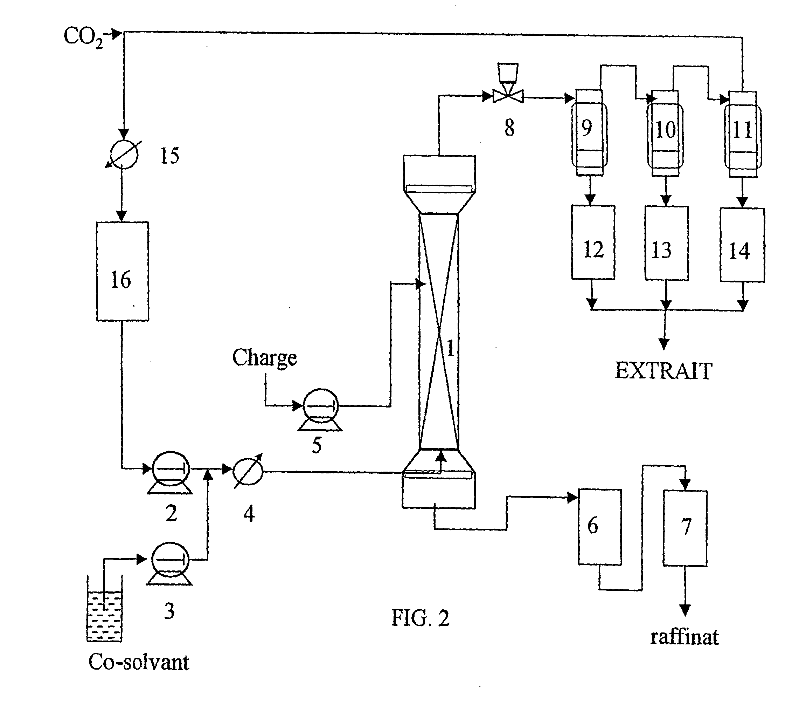

L'équipement représenté sur la figure 2 est constitué principalement d'une colonne de fractionnement (1) d'un diamètre de 58 mm et d'une hauteur de 4 m remplie d'un garnissage de type Intalox de 10 mm en acier inoxydable, dotée d'une double-enveloppe divisée en quatre tronçons superposés permettant la circulation de fluides caloporteurs à des températures différentes afin de réaliser un gradient de température qui va induire un reflux interne d'extrait, comme il est connu dans l'art antérieur. Le fluide solvant est constitué de dioxyde de carbone qui est comprimé à l'état liquide par une pompe (2) volumétrique à membrane à débit réglable entre 10 et 60 kg/h auquel on peut ajouter un co-solvant liquide, par exemple constitué de butane approvisionné dans un réservoir du commerce, grâce à une autre pompe (3) de même type dont le débit peut être ajusté entre 2 et 10 kg/h. Le solvant ainsi comprimé à la pression souhaitée est réchauffé dans un échangeur de chaleur (4) constitué d'un double tube dont le tube extérieur est balayé par de l'eau chaude à température adéquate. La charge à traiter, préalablement portée à une température suffisante pour permettre son pompage, est injectée entre deux étages de la colonne via une pompe (5) volumétrique à membrane dont le débit peut être réglé entre 2 et 10 kg/h. Il est également possible d'injecter directement le co-solvant liquide dans la colonne, favorablement entre le premier et le second étage. Le raffinat sort en pied de colonne, et est décomprimé jusqu'à la pression atmosphérique via un système de sas constitué de deux récipients (6, 7) successifs au sein desquels a lieu la détente à des pressions inférieures à celle régnant dans la colonne (1), permettant le dégazage du liquide et le recyclage partiel du solvant vaporisé depuis le récipient (6). Le solvant chargé en extrait sort en tête de colonne, et est décomprimé via une vanne (8) de type déverseur, la baisse de pression entraînant la démixion du mélange qui est admis dans un ensemble de séparateurs (9, 10, 11) constitués, selon le système décrit dans le brevet français FR-A-2 584 618, déjà cité, de chambres cycloniques permettant la séparation totale de la phase liquide et de la phase gazeuse avec apport de chaleur via les parois des séparateurs dont la double-enveloppe est parcourue par de l'eau chaude, ce qui permet d'apporter l'enthalpie requise pour assurer la vaporisation du solvant ; la phase liquide est soutirée à pression atmosphérique via un système de sas (12, 13, 14) fonctionnant selon le système décrit dans le brevet français FR-A-2 584 618, déjà cité. Le solvant ainsi débarrassé de l'extrait et d'une partie du co-solvant est liquéfié dans un condenseur (15) double-tube dont le tube extérieur est parcouru par un mélange eau-éthylène glycol refroidi vers 0°C, et stocké à l'état liquide vers 5°C dans un réservoir (16) dont le niveau est maintenu stable par appoint de dioxyde de carbone depuis une citerne extérieure.

### 3) Analyse CLHP des lipides polaires.

- Phase stationnaire silice non greffée, Nucleosil 100-5, 2 cartouches de 125x2 mm couplées, précédées d'une précolonne remplie avec le même support (8x3mm) (Macherey-Nagel, Hoechst, Düren, Allemagne).
- Four à colonne, température de 30°C.
- Pompe à gradient quaternaire P1000XR, avec dégazeur à membrane sous pression partielle (Thermo Separation Products, San Jose,Californie, USA).
- Autoinjecteur Kontron autosampler 360 équipé d'un boucle d'injection de 5µl (Kontron Instruments, Milan, Italie).
- Détecteur évaporatif à diffusion de la lumière Cunow DDL 11 (Eurosep, Cergy, France), température du tube évaporateur de 35°C et pression d'azote de 1 bar.

Après évaporation des solvants et dilution dans un mélange chloroforme/méthanol, 1/1 v/v, les extraits sont analysés avec le gradient suivant, à un débit de 0,4 ml/min. comme indiqué dans le tableau 1 ci-dessous.

**Tableau 1**

| Temps (min) | Chloroforme | Chloroforme/Méthanol 60/40 | Chloroforme/Méthanol/Eau 60/34/6 |
|---|---|---|---|
| 0 | 100 | 0 | 0 |
| 1 | 100 | 0 | 0 |
| 11 | 0 | 100 | 0 |
| 27 | 0 | 0 | 100 |
| 31 | 0 | 0 | 100 |
| 32 | 0 | 100 | 0 |
| 35 | 0 | 100 | 0 |
| 36 | 100 | 0 | 0 |
| 50 | 100 | 0 | 0 |

### Exemples 2 : Traitement de l'huile sur un contacteur en mode discontinu.

### 1) Extraction des lipides neutres de l'huile 1.

L'huile 1 est dispersée sous forme d'émulsion dans un mélange eau/éthanol avec les proportions eau/huile/éthanol 84/10/6.

50g de cette émulsion sont introduits dans le contacteur.

L'extraction est conduite avec un solvant constitué de dioxyde de carbone additionné de 10 % d'heptane, à une pression de 250 bar et une température de 60°C.

Les séparateurs sont maintenus à une pression de 50 bar et une température de 50°C.

Le débit de solvant est de 2 kg/h. Après une durée d'extraction de deux heures, un extrait dans l'heptane est récupéré. Après évaporation du solvant, 2 g de lipides neutres sont récupérés.

Le contacteur contient alors un système dispersé de lipides polaires contenant 2,9 g de lipides polaires avec la composition lipidique suivante :
- Sphingolipides : 14,5 % dont 2 % de céramides et 12,5% de glycosphingolipides)
- MGDG : 18,5 %
- DGDG : 45 %
- Phospholipides : 22 %

Cette suspension stable est parfaitement soutirable en l'état du contacteur. Des extractions successives peuvent être effectués directement sur cette émulsion de lipides polaires sans reprise de la charge.

### 2) Extraction des lipides neutres de l'huile 2.

L'huile 2 est dispersée sous forme d'émulsion dans un mélange eau/éthanol avec les proportions eau/huile/éthanol 84/10/6.

50g de cette émulsion sont introduits dans le contacteur.

L'extraction est conduite avec un solvant constitué de dioxyde de carbone additionné de 10% d'heptane, à une pression de 250 bar et une température de 60°C.

Les séparateurs sont maintenus à une pression de 50 bar et une température de 50°C.

Le débit de solvant est de 2 kg/h. Après une durée d'extraction de deux heures, un extrait dans l'heptane est récupéré. Après évaporation du solvant, 2,3 g de lipides neutres sont récupérés

Le contacteur contient alors un système dispersé de lipides polaires dans un mélange eau/éthanol contenant 2,5 g de lipides polaires avec la composition suivante :
- Sphingolipides : 17,5 % dont 2,5 % de céramides et 15 % de glycosphingolipides
- MGDG : 23,5 %
- DGDG : 59 %

Cette suspension stable est parfaitement soutirable en l'état du contacteur. Des extractions successives peuvent être effectués directement sur cette émulsion de lipides polaires sans reprise de la charge.

### 3) Obtention d'une coupe riche en sphingolipides et MGDG.

Successivement à la manipulation décrite ci-dessus en (1), la dispersion déshuilée est soumise à une extraction conduite avec du dioxyde de carbone additionné de 5 % d'éthanol, à une pression de 250 bar et une température de 60°C.

Les séparateurs sont maintenus à une pression de 50 bar et une température de 50°C.

Le débit de solvant est de 2 kg/h. Après une durée d'extraction de trois heures, un extrait dans l'éthanol est récupéré. Après évaporation du solvant, 0,6 g de lipides polaires sont récupérés avec la composition suivante :
Sphingolipides (céramides) : 12 %
Monogalactosyldiglycérides : 88 %

Le contacteur contient alors une suspension stable dans un mélange eau/éthanol contenant 2,2 g de lipides polaires avec la composition suivante :
Sphingolipides (glycosphingolipides) : 16 %
DGDG : 57 %
Phospholipides : 27%

### 4) Obtention d'une coupe riche en glycolipides.

La dispersion raffinat obtenue ci-dessus en (3) est soumise à une extraction conduite avec du dioxyde de carbone additionné de 12% d'éthanol, à une pression de 250 bar et une température de 60°C.

Les séparateurs sont maintenus à une pression de 50 bar et une température de 50°C.

Le débit de solvant est de 2 kg/h. Après une durée d'extraction de trois heures, un extrait dans l'éthanol est récupéré. Après évaporation du solvant, 1,6 g de lipides polaires sont récupérés avec la composition suivante :
Sphingolipides (glycosphingolipides) : 22 %
DGDG : 78 %

Le contacteur contient alors une système dispersé stable de lipides polaires dans un mélange eau/éthanol contenant 0,6 g de lipides polaires avec une teneur en phospholipides supérieure à 98%.

### 5) Obtention d'une coupe riche en DGDG.

Successivement à la manipulation décrite en (2) ci-dessus, la dispersion raffinat déshuilée est soumise à une extraction conduite avec du dioxyde de carbone additionné de 8% d'éthanol, à une pression de 250 bar et une température de 60°C.

Les séparateurs sont maintenus à une pression de 50 bar et une température de 50°C.

Le débit de solvant est de 2 kg/h. Après une durée d'extraction de trois heures, un extrait dans l'éthanol est récupéré. Après évaporation du solvant, 1g de lipides polaires sont récupérés avec la composition suivante
Sphingolipides : 43 %
Monogalactosyldiglycérides : 51 %

Le contacteur contient alors une dispersion de lipides polaires dans un mélange eau/éthanol contenant 1,5 g de lipides polaires avec une teneur en DGDG supérieure à 95 %.

### Exemple 3 : Traitement de l'huile par étapes successives sur une seule colonne en mode continu.

L'huile, préalablement mise en émulsion comme il a été indiqué ci-dessus, est traitée en plusieurs étapes dans des conditions où la polarité du fluide solvant à pression supercritique est successivement augmentée, ainsi qu'il a été décrit ci-dessus.

### 1) Extraction des lipides neutres.

L'huile 1 est mise en émulsion dans un mélange eau/éthanol avec les proportions eau/huile/éthanol 84/10/6.

Cette émulsion est injectée dans la colonne entre le troisième étage et l'étage supérieur à un débit de 1,2 kg/h. Un arrosage est effectuée en tête de colonne à l'aide d'eau et à un débit de 1,5 kg/h.

L'extraction est conduite avec un solvant constitué de dioxyde de carbone additionné de 9,7 % d'éthanol à 200 bar et 60°C, injecté en pied de colonne à un débit de 28,4 kg/h.

Une période d'équilibre de deux heures est respectée.

En tête de colonne est récupéré un extrait lipidique d'une teneur en lipides neutres supérieure à 99 %.

Le raffinat est récupéré en pied de colonne sous forme d'une dispersion de lipides polaires dans un mélange eau/éthanol, avec la composition lipidique suivante :
- Absence de lipides neutres (triglycérides et stérols)
- Sphingolipides : 14,5 % dont 2 % de céramides, 12,5 % de glycosphingolipides
- MGDG : 18,5 %
- DGDG : 45 %
- Phospholipides : 22 %

### 2) Extraction des lipides neutres.

L'huile 1 est mise en émulsion dans un mélange eau/éthanol avec les proportions eau/huile/éthanol 84/10/6.

Cette émulsion est injectée en tête de colonne à un débit de 2 kg/h..

L'extraction est conduite à 200 bar et 60°C avec un solvant constitué de dioxyde de carbone injecté en pied de colonne à un débit de 23 kg/h et d'éthanol injecté entre le premier et le deuxième étage de la colonne à un débit de 2,4kg/h.

Une période d'équilibre de deux heures est respectée.

En tête de colonne est récupéré un extrait lipidique d'une teneur en lipides neutres supérieure à 99 % après évaporation du solvant.

Le raffinat est récupéré en pied de colonne sous forme d'un système dispersé, avec la composition lipidique suivante :
- Absence de lipides neutres (triglycérides et stérols)
- Sphingolipides : 14,5 % dont 2 % de céramides et 12,5% de glycosphingolipides
- MGDG : 1,5 %
- DGDG : 45 %
- Phospholipides : 22 %

### 3) Extraction des lipides neutres.

L'huile 2 est mise en émulsion dans un mélange eau/éthanol avec les proportions eau/huile/éthanol 84/10/6.

Cette émulsion est injectée en tête de colonne à un débit de 2 kg/h.

L'extraction est conduite à 200 bar et 60°C avec un solvant constitué de dioxyde de carbone injecté en pied de colonne à un débit de 25 kg/h et d'éthanol injecté entre le premier et le deuxième étage de la colonne à un débit de 2,1 kg/h.

Une période d'équilibre de deux heures est respectée.

En tête de colonne est récupéré un extrait lipidique d'une teneur en lipides neutres supérieure à 99 %.

Le raffinat est récupéré en pied de colonne sous forme d'un système dispersé de lipides polaires dans un mélange eau/éthanol, avec la composition lipidique suivante :
- Absence de lipides neutres (triglycérides et stérols)
- Sphingolipides : 17,5 % dont 2,5 % de céramides, 15% de glycosphingolipides
- MGDG : 23,5 %
- DGDG : 59 %

### 4) Obtention d'une coupe riche en sphingolipides et MGDG.

Le raffinat obtenu ci-dessus en (2) est injecté en tête de colonne à un débit de 1 kg/h.

L'extraction est conduite à 250 bar et 60°C avec un solvant constitué de dioxyde de carbone injecté en pied de colonne à un débit de 20 kg/h et d'éthanol injecté entre le premier et le deuxième étage de la colonne à un débit de 3kg/h.

Après une période d'équilibre de deux heures, l'extrait récupéré en tête de colonne est enrichi en lipides polaires les moins polaires de la classe des sphingolipides et MGDG avec la composition lipidique suivante :
Sphingolipides (céramides) : 8 %
MGDG : 82 %
Glycosphingolipides : 6 %
DGDG : 4 %

En pied de colonne, le raffinat est récupéré sous forme d'une dispersion stable de lipides polaires considérablement enrichie en lipides les plus polaires de la classe des DGDG et phospholipides dans un mélange eau/éthanol, avec la composition lipidique suivante :
Glycosphingolipides : 13%
DGDG : 59 %
Phospholipides : 28 %

### 5) Obtention d'une coupe riche en glycolipides (DGDG).

La dispersion raffinat ci-dessus en (3) est injectée en tête de colonne à un débit de 1 kg/h.

L'extraction est conduite à 250 bar et 60°C avec un solvant constitué de dioxyde de carbone injecté en pied de colonne à un débit de 20 kg/h et d'éthanol injecté entre le premier et le deuxième étage de la colonne à un débit de 3 kg/h.

Après une période d'équilibre de deux heures, l'extrait récupéré en tête de colonne est enrichi en lipides polaires les moins polaires de la classe des sphingolipides et MGDG avec ela composition lipidique suivante :
Sphingolipides : 40 %
MGDG : 54 %
DGDG : 6 %

En pied de colonne est récupérée une dispersion de lipides polaires dans un mélange eau/éthanol avec la composition lipidique suivante :
Glycosphingolipides : 4 %
DGDG : 96 %

## Revendications

1. Procédé de fractionnement d'un mélange de lipides de polarités différentes, à l'aide d'un solvant supercritique **caractérisé en ce que** :
a) on prépare une dispersion dudit mélange de lipides dans un milieu aqueux,
b) on soumet ladite dispersion à un fractionnement par mise en contact avec un solvant à pression supercritique,
c) on recueille après ledit fractionnement deux fractions de compositions différentes,
d) éventuellement, on répète une ou plusieurs fois le fractionnement sur l'une au moins des fractions recueillies lors d'un fractionnement antérieur.

2. Procédé selon la revendication 1, **caractérisé en ce que** ledit milieu aqueux utilisé pour réaliser la dispersion est de l'eau ou une solution aqueuse de solvants organiques solubles dans l'eau, tels les alcools et de préférence l'éthanol, les cétones et de préférence l'acétone, les esters et de préférence l'acétate d'éthyle.

3. Procédé selon l'une des revendications 1 ou 2, **caractérisé en ce que** l'on réalise plusieurs extractions successives en discontinu dans un contacteur constitué d'un récipient sous pression éventuellement doté d'un garnissage destiné à améliorer la qualité du contact entre le mélange à fractionner mis initialement en dispersion et un solvant à pression supercritique dont le pouvoir solvant va être modifié en plusieurs étapes successives de manière à extraire successivement les différentes familles de lipides par ordre croissant de polarité.

4. Procédé selon les revendications 1 ou 2, **caractérisé en ce que** l'on réalise le fractionnement sur une colonne fonctionnant en continu à contre-courant de façon à ce que la fraction obtenue en tête de colonne après séparation du solvant, appelée extrait, soit considérablement enrichie en lipides les moins polaires par rapport au mélange de lipides de départ et **en ce que** la fraction recueillie en pied de colonne, appelée raffinat, se présente sous la forme d'une dispersion dans un liquide qui est considérablement enrichie en lipides les plus polaires.

5. Procédé selon l'une quelconque des revendications 1 à 4, **caractérisé en ce que** pour l'un au moins des fractionnements, on utilise comme solvant à pression supercritique, le dioxyde de carbone pur ou en mélange avec différents co-solvants choisis parmi les hydrocarbures légers comprenant entre 2 et 8 atomes de carbone, les alcools et de préférence l'éthanol, les cétones et de préférence l'acétone, les esters et de préférence l'acétate d'éthyle, les hydrocarbures halogénés et de préférence les hydrocarbures fluorés, ledit solvant étant porté à une pression comprise entre 7,4 et 50 MPa et de préférence entre 10 et 40 MPa et à une température comprise entre 0 et 80°C.

6. Procédé selon l'une quelconque des revendications 1 à 4, **caractérisé en ce que** pour l'une au moins des fractionnements, on utilise comme solvant à pression supercritique un hydrocarbure ayant entre 2 et 5 atomes de carbone, et de préférence 3 ou 4 atomes de carbone, à une pression comprise entre 4,2 et 20 MPa, et plus favorablement entre 5 et 15 MPa et à une température comprise entre 0 et 80°C.

7. Procédé selon l'une quelconque des revendications 1 à 6, **caractérisé en ce que** ledit mélange de lipides est une huile extraite de céréale par exemple de blé, de gluten de blé, d'orge, d'avoine, de millet, de riz, etc....

8. Procédé selon l'une quelconque des revendications 1 à 7, **caractérisé en ce que** l'on recueille en tête de colonne une fraction , appelée extrait, constituée d'un mélange très appauvri en lipides polaires et fortement enrichi en lipides neutres.

9. Procédé selon l'une quelconque des revendications précédentes, **caractérisé en ce que** l'on soumet la fraction obtenue en pied de colonne appelée raffinat à un ou plusieurs fractionnements successifs et l'on recueille un raffinat constitué d'un mélange enrichi en lipides polaires appartenant à l'une au moins des classes suivantes : les sphingolipides, dont les céramides et les cérébrosides, les glycolipides, dont les monogalactosyldiglycérides et les digalactosyldiglycérides, les phospholipides et parmi ceux-ci notamment les phosphatidyl-cholines, les phosphatidyl-éthanolamines, les phospholipides acides, et leurs dérivés.

10. Procédé selon l'une des revendications 1 à 9, **caractérisé en ce qu'**il comprend les étapes successives suivantes :
- on prépare une émulsion à base du mélange de lipide à fractionner dans de l'eau ;
- on traite l'émulsion sur une colonne fonctionnant à contre-courant avec reflux d'extrait, en obtenant une fraction en tête de colonne après séparation du solvant, appelée extrait, et une fraction en pied de colonne appelée raffinat se présentant comme une émulsion dans l'eau ;
- on répète plusieurs fois successives le fractionnement du raffinat en reprenant pour chaque fractionnement le dernier raffinat obtenu, on traite le raffinat obtenu à chaque étape précédente sur le même type d'équipement mais en accroissant à chaque fois la polarité du fluide solvant en faisant varier sa pression, sa température et teneur en co-solvant, de façon à obtenir dans les extraits successifs des fractions très enrichies en chacune des familles de lipides : lipides neutres tels les triglycérides et les stérols, composés faiblement polaires, tels les sphingolipides,les céramides et les cérébrosides, et les monogalactosyldiglycérides (MGDG), composés moyennement polaires, tels les digalactosyldiglycérides (DGDG), et finalement et successivement par ordre de polarité les différents phospholipides et de leurs dérivés, parmi lesquels on peut citer : phosphatidyl-éthanolamine, phosphatidyl-choline, phospholipides acides.

11. Procédé de purification des lipides polaires à partir d'une matière naturelle ou synthétique constituée principalement d'un mélange de lipides, **caractérisée en ce que** l'on fractionne ladite matière par un procédé selon l'une quelconque des revendications 1 à 10.

## Patentansprüche

1. Verfahren zur Fraktionierung eines Gemisches von Lipiden mit unterschiedlichen Polaritäten mit Hilfe eines superkritischen Lösungsmittels **gekennzeichnet dadurch, dass**:
a) man eine Dispersion besagten Lipidgemischs in wässrigem Medium präpariert,
b) man die besagte Dispersion einer Fraktionierung, durch Zusammenbringung mit einem Lösungsmittel unter superkritischem Druck, unterwirft,
c) man nach besagter Fraktionierung zwei Fraktionen mit unterschiedlichen Zusammen-setzungen auffängt,
d) man ein- oder gegebenenfalls mehrmals die Fraktionierung mindestens einer der Fraktionen, welche durch vorhergehende Fraktionierung erhalten wurde, wiederholt.

2. Verfahren nach dem Anspruch 1, **dadurch gekennzeichnet, dass** besagtes wässriges Medium, welches zur Darstellung der Dispersion verwendet wird, Wasser oder eine wässrige Lösung aus organischen, wasserlöslichen Lösungsmitteln wie Alkoholen und bevorzugt Ethanol, Ketonen und bevorzugt Aceton, Estern und bevorzugt Ethylacetat, ist.

3. Verfahren nach einem der Ansprüche 1 oder 2, **dadurch gekennzeichnet, dass** man mehrere aufeinanderfolgende, diskontinuierliche Extraktionen in einem Schaltschütz ausführt, welcher aus einem unter Druck stehenden Auffangbehälter, gegebenenfalls ausgestattet mit einer Packung zur Verbesserung der Qualität des Kontaktes zwischen der zu fraktionierenden Mischung, welche vorhergehend in Dispersion gebracht wurde, und dem unter superkritischem Druck stehenden Lösungsmittel, dessen Lösungsvermögen in mehreren aufeinanderfolgenden Schritten auf solche Weise verändert wird, dass die verschiedenen Familien der Lipide nacheinander mit steigender Ordnung ihrer Polarität extrahiert werden, besteht.

4. Verfahren nach den Ansprüchen 1 oder 2, **dadurch gekennzeichnet, dass** man die Fraktionierung in einer Kolonne durchführt, welche kontinuierlich im Gegenstrom in solcher Weise funktioniert, dass die am Kolonnenkopf erhaltene Fraktion nach Abtrennung des Lösungsmittels, genannt Extrakt, im Vergleich zum Ausgangslipidgemisch beachtlich an wenig polaren Lipiden angereichert ist und die im Sumpf der Kolonne aufgefangene Fraktion, genannt Raffinat, sich in der Form einer Dispersion in einer Flüssigkeit präsentiert, welche beachtlich an stark polaren Lipiden angereichert ist.

5. Verfahren nach einem der Ansprüche 1 bis 4, **dadurch gekennzeichnet, dass** man für mindestens eine der Fraktionierungen als Lösungsmittel unter superkritischem Druck Kohlendioxid rein oder im Gemisch mit unterschiedlichen Hilfslösungsmitteln, ausgewählt unter den leichten Kohlenwasserstoffen mit 2 bis 8 Kohlenstoffatomen, den Alkoholen und bevorzugt Ethanol, den Ketonen und bevorzugt Aceton, den Estern und bevorzugt Ethylacetat, den halogenierten Kohlenwasserstoffen und bevorzugt fluorierte Kohlenwasserstoffe, benutzt und besagtes Lösungsmittel auf einen Druck zwischen 7,4 und 50 MPa und bevorzugt zwischen 10 und 40 MPa und auf eine Temperatur zwischen 0 und 80°C gebracht wird.

6. Verfahren nach einem der Ansprüche 1 bis 4, **dadurch gekennzeichnet, dass** man für mindestens eine der Fraktionierungen einen Kohlenwasserstoff mit 2 bis 5 Kohlenstoffatomen, bevorzugt 3 oder 4 Kohlenstoffatome, als Lösungsmittel unter superkritischem Druck bei einem Druck von 4,2 bis 20 MPa und am besten zwischen 5 und 15 MPa und einer Temperatur zwischen 0 und 80°C benutzt.

7. Verfahren nach einem der Ansprüche 1 bis 6, **dadurch gekennzeichnet, dass** das besagte Lipidgemisch ein Getreideölextrakt zum Beispiel aus Weizen, Weizengluten, Gerste, Hafer, Hirse, Reis, etc... ist.

8. Verfahren nach einem der Ansprüche 1 bis 7, **dadurch gekennzeichnet, dass** man am Kolonnenkopf eine Fraktion, genannt Extrakt, auffängt, bestehend aus einem Gemisch arm an polaren Lipiden und sehr stark angereichert an neutralen Lipiden.

9. Verfahren nach einem der obenstehenden Ansprüche, **dadurch gekennzeichnet, dass** man die im Sumpf der Kolonne erhaltene Fraktion, genannt Raffinat, einer oder mehrerer aufeinanderfolgenden Fraktionierungen unterwirft und man ein Raffinat auffängt, welches aus einem an polaren Lipiden angereicherten Gemisch besteht, welche mindestens einer der folgenden Klassen angehören: die Sphingolipide, wie die Zeramide und die Zereobroside, die Glycolipide, wie die Monogalactosyldiglyceride und die Digalactosyldiglyceride, die Phospholipide und hierbei besonders die Phosphatidylcholine, die Phosphatidylethanolamine, die Phosphatidsäuren und ihre Derivate.

10. Verfahren nach einem der Ansprüche 1 bis 9, **dadurch gekennzeichnet, dass** es die nachstehenden, aufeinanderfolgenden Schritte beinhaltet:
- man stellt eine Emulsion auf Basis des zu fraktionierenden Lipidgemisches und Wasser her;
- man behandelt die Emulsion auf einer Kolonne im Gegenstrom mit Rückfluss des Extraktes, wobei man am Kolonnenkopf nach Abtrennung des Lösungsmittels eine Fraktion, genannt Extrakt, und im Sumpf der Kolonne eine Fraktion, genannt Raffinat, welche eine Emulsion in Wasser darstellt, erhält;
- man wiederholt mehrmals aufeinanderfolgend die Fraktionierung des Raffinates, wobei für jede Fraktionierung das jeweils zuletzt erhaltene Raffinat aufgenommen wird; man behandelt das im vorhergehenden Schritt erhaltene Raffinat mit dem gleichen Gerätetyp jedoch unter Erhöhung der Polarität des Lösungsmittels bei jedem Schritt durch variieren des Druckes, der Temperatur und des Gehaltes an Hilfslösungsmittel in der Weise, dass man in den aufeinanderfolgenden Extrakten Fraktionen erhält, welche stark an einer der Familien der Lipide angereichert sind: neutrale Lipide wie die Triglyceride und die Sterole, schwach polare Verbindungen wie die Sphingolipide, die Zeramide und die Zereobroside, und die Monogalactosyldiglyceride (MGDG), mittelmäßig stark polare Verbindungen wie die Digalactosyldiglyceride (DGDG), und schließlich und nacheinanderfolgend nach Stärke der Polarität die verschiedenen Phosphorlipide und ihre Derivate, unter welchen man zitieren kann: Phosphatidylethanolamin, Phosphatidyl-choline, Phosphatidsäuren.

11. Verfahren zur Reinigung von polaren Lipiden ausgehend von natürlichem oder synthetischem Material überwiegend bestehend aus einem Lipidgemisch, **dadurch gekennzeichnet, dass** man das besagte Material nach einem, der unter den Ansprüchen 1 bis 10 beschriebenen Verfahren, fraktioniert.

## Claims

1. Method for fractionating a mixture of lipids having different polarities, using a supercritical solvent, **characterized in that**:
a) a dispersion of said mixture of lipids is prepared in an aqueous medium,
b) said dispersion is subjected to fractionation by contacting with a solvent under supercritical pressure,
c) after said fractionation, two fractions of different compositions are collected,
d) optionally, fractionation is repeated one or more times on at least one of the fractions collected during a previous fractionation.

2. Method according to claim 1, **characterized in that** said aqueous medium used to conduct dispersion is water or an aqueous solution of organic solvents soluble in water, such as alcohols and preferably ethanol, ketones and preferably acetone, esters and preferably ethyl acetate.

3. Method according to either of claims 1 or 2, **characterized in that** several successive extractions are performed discontinuously in a contactor formed of a container under pressure optionally fitted with lining intended to improve the quality of contact between the mixture to be fractionated initially placed in dispersion and a solvent under supercritical pressure whose solvent power is to be modified in several successive steps, so as successively to extract the different families of lipids in increasing order of polarity.

4. Method according to claims 1 or 2, **characterized in that** fractionation is performed on a column under continuous counter-current operation such that the fraction obtained at the head of the column after separation of the solvent, called extract, is considerably enriched in the least polar lipids relative to the mixture of initial lipids, and **in that** the fraction collected at the foot of the column, called raffinate, is in the form of a dispersion in a liquid which is considerably enriched in the most polar lipids.

5. Method according to any of claims 1 to 4, **characterized in that** for at least one of the fractionations, as solvent under supercritical pressure carbon dioxide is used either pure or in a mixture with different co-solvents chosen from among the light hydrocarbons having between 2 and 8 carbon atoms, alcohols and preferably ethanol, ketones and preferably acetone, esters and preferably ethyl acetate, halogenated hydrocarbons and preferably fluorinated hydrocarbons, said solvent being brought to a pressure of between 7.4 and 50 MPa and preferably to between 10 and 40 MPa at a temperature lying between 0 and 80°C.

6. Method according to any of claims 1 to 4, **characterized in that** for at least one of the fractionations, as solvent under supercritical pressure a hydrocarbon is used having between 2 and 5 carbon atoms, and preferably 3 or 4 carbon atoms, at a pressure of between 4.2 and 20 MPa, more favourably between 5 and 15 MPa and at a temperature of between 0 and 80°C.

7. Method according to any of claims 1 to 6, **characterized in that** said mixture of lipids is an oil extracted from cereals, for example corn, corn gluten, malt, oats, millet, rice, etc..

8. Method according to any of claims 1 to 7, **characterized in that** at the head of the column a fraction is collected, called extract, formed of a mixture very low in polar lipids and highly enriched in neutral lipids.

9. Method according to any of the preceding claims, **characterized in that** the fraction obtained at the foot of the column called raffinate, is subjected to one or more successive fractionations and **in that** a raffinate is collected formed of a mixture enriched in polar lipids belonging to at least one of the following classes: the sphingolipids, including ceramides and cerebrosides, the glycolipids including monogalactosyldiglycerides and digalactosyldiglycerides, the phospholipids among which in particular phosphatidyl-cholines, phosphatidyl-ethanolamines, acid phospholipids and their derivatives.

10. Method according to any of claims 1 to 9, **characterized in that** it comprises the following successive steps:
- an emulsion is prepared containing the mixture of lipids to be fractionated in water;
- the emulsion is treated on a column under counter-current flow with extract reflux, obtaining a fraction at the head of the column after separation of the solvent, called extract, and a fraction at the foot of the column called raffinate in the form of an emulsion in water;
- fractionation of the raffinate is repeated several successive times using the last raffinate obtained for each fractionation, the raffinate obtained at each preceding step being treated on the same type of equipment but the polarity of the solvent fluid being increased each time by varying its pressure, its temperature and co-solvent content, so as to obtain fractions in the successive extracts that are highly enriched in each of the families of lipids: neutral lipids such as triglycerides and sterols, scarcely polar compounds such as sphingolipids, ceramides and cerebrosides, monogalactosyldiglycerides (MGDG), compounds with average polarity such as digalactosyldiglycerides (DGDG) and finally and successively in order of polarity the different phospholipids and their derivatives, among which mention may be made of: phosphatidylethanolamine, phosphatidyl-choline, acid phospholipids.

11. Method for purifying polar lipids from a natural or synthetic material mainly made up of a mixture of lipids, **characterized in that** said material is fractionated using a method according to any of claims 1 to 10.
